# EUROPEAN PATENT APPLICATION

(11) **EP 2 019 109 A1**
(43) Date of publication of application: **28.01.2009**
(21) Application number: 07113278.1
(22) Date of filing: 26.07.2007
(51) Int. Cl.: C07F 17/02, A61K 31/28

(54) **Trimetal-arene clusters with anticancer activity**

(71) Applicant: Université de Neuchâtel, 2001 Neuchâtel 1 (CH); Ecole Polytechnique Fédérale de Lausanne (EPFL), 1015 Lausanne (CH)
(72) Inventor: Therrien, Bruno, 2000, Neuchâtel (CH); Süss-Fink, Georg, 2000, Neuchâtel (CH); Dyson, Paul, 1024, Ecublens (CH); Ang, Wee Han, Cambridge, MA 02140 (US)
(74) Representative: Ganguillet, Cyril

(57) **Abstract**

The present invention relates to new medicaments, pharmaceutical compositions and methods of treatment of cancer. Disclosed are trimetallic clusters for use as a medicament, in particular in the treatment of cancer including metastasis. Preferably, the compounds are provided in the form of pharmaceutically acceptable salts. Preferred compound include trinuclear ruthenium-arene clusters as exemplified by the compounds **1a** and **1b** shown in Figure 1.

## Description

### Field of the Invention

The present invention relates to new medicaments, pharmaceutical compositions and methods of treatment of cancer on the basis of triruthenium clusters disclosed herein.

### Background and Problems to be Solved

Recent years have witnessed a tremendous increase in research into anticancer compounds based on ruthenium with two ruthenium coordination compounds that have a different spectrum of activity to platinum drugs currently undergoing clinical evaluation. Notably, the differing activity is assigned to a different mode of action guided by the high affinity of ruthenium(III) compounds toward proteins.

More recently, interest has focused on organometallic compounds, specifically on ruthenium(II)-arene compounds which show excellent antiproliferative properties both *in vitro* and *in vivo*. It has been found that a structurally diverse range of compounds all exhibit interesting properties. For example, a wide range of arenes can be tolerated and the arene can even be replaced by cyclopentadienyl, pentamethylcyclopentadienyl or the sulphur macrocycle 1,4,7-trithiacyclononane without affecting the *in vitro* activity significantly. It has even been found that some rhodium and osmium analogues, evaluated in HT29 colon carcinoma, A549 lung carcinoma and T47D breast carcinoma cell lines *in vitro*, display activities that are comparable to the related ruthenium(II)-arene complexes. A feature of many of these compounds, notably those with the 1,3,5-triaza-7-phosphatricyclo[3.3.1.1]decane (pta) ligand, is that although the activity is lower than that of cisplatin and related Pt(II) compounds *in vitro,* the activity against metastatic (secondary) tumours evaluated *in vivo* is high.
C. S. Allardyce, P. J. Dyson (2002), Journal of Cluster Science, 12, 563, disclose metal clusters and their potential application in cancer therapy.
C. S. Allardyce, P. J. Dyson, D. J. Ellis, P. A. Salter, R. Scopelliti (2003), Journal of Organometallic Chemistry 668, 35, disclose ruthenium(II)-arene complexes and their antibiotic and antiviral properties.

In view of the above, it is an objective to identify still further compounds useful in the treatment of cancer and in particular of metastasis.

It is an objective to provide compounds which are still more cytotoxic against cancer cells.

It is a particular objective to provide further ruthenium-based organometallic compounds that are at least as effective as or even more effective than the organometallic compounds known so far.

### Summary of the Invention

Remarkably, the present inventors have found unusually high cytotoxic activity of compounds of formula (I) against cancer cells.

Accordingly, the present invention provides, in a first aspect, compounds of formula (I) for use as a medicament, 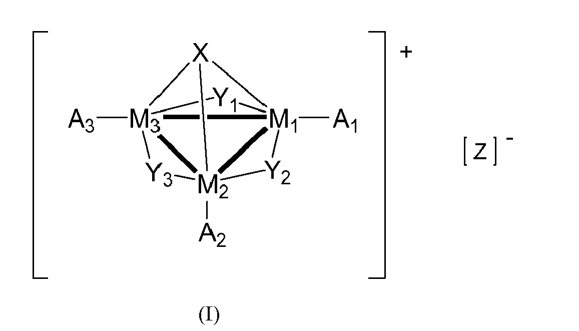 wherein,
M₁, M₂ and M₃ are metals selected independently from each other from Ru, Os, Ir, Rh, Co and Fe;
X is selected from O, N, P, S, Se, or Te;
Y₁, Y₂, Y₃ are independently of each other selected from H, OH, SR₁, and PR₁R₂, wherein R₁, R₂ are, independently of each other, selected from aryl and alkyl, said alkyl or aryl optionally being substituted and optionally comprising one or more heteroatoms;
A₁, A₂ and A₃ are independently of each other selected from η⁶-arenes, η⁵-cyclopentadienyls, or derivatives of these; and,
Z is a pharmaceutically acceptable anionic species.

The present invention further provides compounds of formula (I) for the treatment of cancer including both primary tumours, but also the treatment of metastasis.

The present invention also provides a pharmaceutical composition comprising the compound according to formula (I).

In a further aspect, the present invention provides a method for the treatment of cancer, the method comprising the step of administering to an individual in need thereof a pharmaceutically effective amount of the compound according to formula (I).

### Brief Description of the Drawings

In the figures,
**Figure 1** shows trinuclear **(1a, 1b)** and tetranuclear **(2a-2c)** ruthenium-arene clusters evaluated for anticancer activity.
**Figures 2a** and **2b** show dose-response curves of exposure of compounds **1a** (Figure 2a) and 2b (Figure 2b) to A2780 and 2780cis ovarian carcinoma cell lines, determined using the MTT assay.

### Detailed Description of the Preferred Embodiments

In its general scope, the present invention relates to trinuclear metal clusters of formula (II) below and their use as medicaments, in particular in the treatment and/or prophylaxis of cancer, including metastasis. 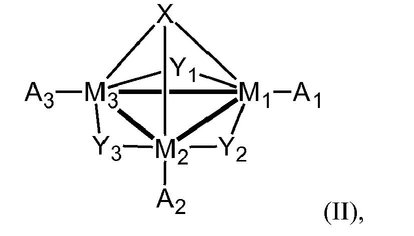 wherein,
M₁, M₂ and M₃ are metals selected independently from each other from Ru, Os, Ir, Rh, Co and Fe;
X is selected from O, N, P, S, Se, or Te;
Y₁, Y₂, Y₃ are independently of each other selected from H, OH, SR₁, and PR₁R₂, wherein R₁, R₂ are, independently of each other, selected from aryl and alkyl, said alkyl or aryl optionally being substituted and optionally comprising one or more heteroatoms; A₁, A₂ and A₃ are independently of each other selected from η⁶-arenes, η⁵-cyclopentadienyls, η³-1,4,7-trithiacyclononane, η³-1,4,7-triazacyclononane or derivatives of these.

The clusters of formula (II) may be charged or neutral. Preferably, they are positively charged and provided in the form of a pharmaceutically acceptable salt. Preferably, the compounds carry the charge +1.

If the clusters of formula (II) are positively charged, they are provided together with a pharmaceutically acceptable anion. Preferably, the anion is [Z], preferably [Z]⁻, where [Z] stands for any organic or pharmaceutically acceptable inorganic anion. As mere illustrative examples [Z]⁻ can be selected from Cl⁻, Br⁻, I⁻, BF₄⁻, PF₆⁻, BPh₄⁻, CF₃SO₃⁻, NO₃⁻, SbF₆⁻, amongst a vast number of known pharmaceutically acceptable inorganic anions. For purely illustrative purposes, citrate, succinate, ascorbate and tartrate, are mentioned here as suitable organic anions.

The term "pharmaceutically acceptable", as used herein pertains to compounds, materials, compositions, and/or dosage forms which are, within the scope of sound medical judgement, suitable for use in contact with the tissues of a subject (e.g. human) without excessive toxicity, irritation, allergic response, or other problem or complication, commensurate with a reasonable benefit/risk ratio.

Within the context of this specification the word "comprises" is taken to mean "includes, among other things". It is not intended to be construed as "consists only of".

In the compounds of formula (I) or (II) above, M₁, M₂ and M₃ may be the same or different. Preferably they are independently selected from Ru (ruthenium), Rh (rhodium) and Os (osmium), Ir (iridium), Co (cobalt) and Fe (iron). Preferably they are selected from Ru, Rh, Os and Ir, more preferably from Ru, Rh, and Os. Most preferably they are Ru, for example Ru(II).

Preferably M₁, M₂ and M₃ are all the same metal.

In the compounds of formula (I) or (II) above, X is selected from O, N, P, S, Se, or Te. Preferably it is O.

In the compounds of formula (I) or (II) above, Y₁, Y₂, Y₃ are independently of each other selected from H, OH, SR₁, and PR₁R₂, wherein R₁, R₂ are, independently of each other, selected from aryl and alkyl, said alkyl or aryl optionally being substituted and optionally comprising one or more heteroatoms.

R₁, R₂ may be linear, branched and/or cyclic alkyls. Preferably, they include from 1 to 30 carbons, more preferably 1 to 20, 1 to 10, and most preferably 2 to 6 carbon atoms. The alkyls may be substituted. For example, hydrogen atoms may be replaced by halogens, for example, F, Cl, and/or Br. R₁ and/or R₂ may comprise one or more heteroatoms, for example O, S, N, P, or halogens. In PR₁R₂, R₁ and R₂ may be linked with each other so as to provide, together with the P, a cyclic system, which may include one or more rings.

R₁, R₂ may be aryls, which may be substituted, for example by linear, branched and/or cyclic alkyls optionally comprising heteroatoms as defined above. The aryl may comprise one or more heteroatoms, too, in particular O and/or N. Hydrogen atoms may be partly or totally replaced by halogens and/or other substituents. The aryl is preferably C5-C30, more preferably C6-C20, most preferably C6-C10.

Preferably, Y₁, Y₂, Y₃ represent hydrogen atoms.

A₁, A₂ and/or A₃ may all be the same, all different, or two of A₁-A₃ may be the same and one different. For example, According to a preferred embodiment, A₁, A₂ and/or A₃ are selected from compounds of formula (III) or (IV): 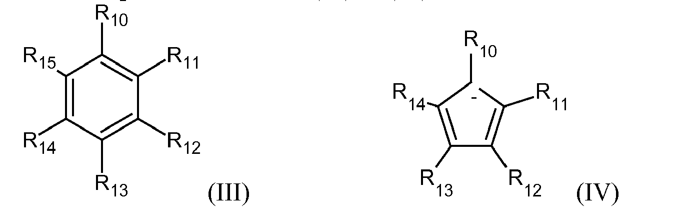 wherein, if A₁, A₂ and/or A₃, is (are) (III), any one of R₁₀-R₁₅, or, if A₁, A₂ and/or A₃ is (are) (IV), respectively, any one of R₁₀-R₁₄, are independently selected from H, C1-C20 alkyl, C2-20 alkenyl, C2-C20 alkynyl, C6-C22 aryl, said alkyl, alkenyl, alkynyl being linear, branched or cyclic, and said alkyl, alkenyl, alkynyl and aryls being optionally substituted and optionally comprising one or more heteroatoms,
wherein any of the residues R₁₀-R₁₅ or R₁₀-R₁₄, respectively may be covalently connected with one or more other residues of R₁₀-R₁₅ or R₁₀-R₁₄, respectively, to form one or several rings fused to the ring of formula (III) or (IV), respectively.

Examples of A₁, A₂ and/or A₃, mentioned here for the mere purpose of illustration, are benzene, methylbenzene, hexamethylbenzene, cymene, for example *o*-, *m*- or *p*-cymene, durene, cyclopentadienyl and pentamethylcyclopentadienyl.

Preferably, R₁₀-R₁₅ or R₁₀-R₁₄, in the compounds of formula (III) or (IV), respectively, are selected independently from each other from H and C1-C10, more preferably C1-C5 alkyls. For example, any one of R₁₀-R₁₅ or R₁₀-R₁₄, in the compounds of formula (III) or (IV), respectively, is selected independently from the other from H, methyl, ethyl, propyl, isopropyl, butyl, sec-butyl, tert-butyl, isobutyl, 1-ethyl-propyl, 1-methylbutyl, 2-methylbutyl, 3-methylbutyl, pentyl, hexyl, heptyl, octyl, nonyl, decyl, for example.

Substituents of residues R₁₀-R₁₅ or R₁₀-R₁₄, may be selected from halogens, in particular F, Cl, and Br, C1-C15, preferably C1-C10, more preferably C1-C5 alkyls, alkenyls, alkynyls and aryls (which may or may not comprise heteroatoms, in particular N, O, P, S), -OH, -COOH, =O, -SH, =S, -C≡N, -NO₂, -NR₁R₂, with R₁ and R₂ being, independently of each other, H or as defined above with respect to PR₁R₂, for example-NH₂.

According to an embodiment, one two or all three of A₁, A₂ and/or A₃ are covalently connected to each other, for example by alkylene or other linking groups.

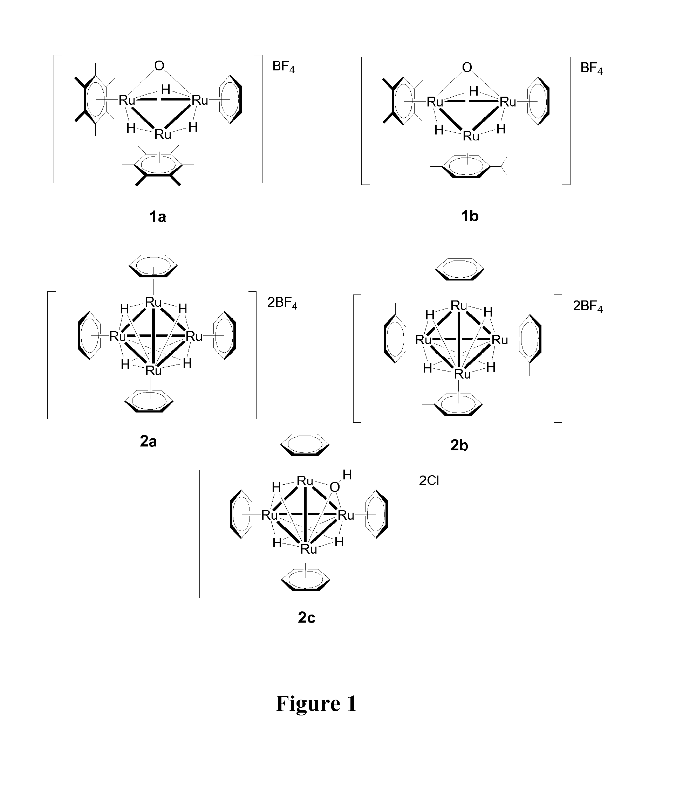

According to a preferred embodiment, the compound according to the present invention is selected from [(η⁶-C₆H₆)(η⁶-C₆Me₆)₂Ru₃(µ-H)₃(µ₃-O)][Z] and [(η⁶-C₆H₆)(η⁶-1,4-ⁱPrC₆H₄Me) (η⁶-C₆Me₆)Ru₃(µ-H)3(µ₃-O)][Z] wherein Z is a pharmaceutically acceptable anionic species. In these compounds, [(η⁶-C₆H₆)(η⁶-C₆Me₆)₂Ru₃(µ-H)₃(µ₃-O)] corresponds to the cationic part of compound 1a shown in Figure 1 and [(η⁶-C₆H₆)(η⁶-1,4-ⁱPrC₆H₄Me)(η⁶-C₆Me₆)Ru₃(µ-H)₃(µ₃-O)] corresponds to the cationic part of compound 1b shown in Figure 1.

The compounds encompassed by the present invention also concern compounds of the formula (V):

[(η-A₁)(η-A₂)(η-A₃)M₃(µ₂-Y₁)(µ₂-Y₂)(µ₂-Y₃)(µ₃-X)] (V)

wherein,
η stands at each time for either η⁶ or η⁵;
M₁-M₃; A₁- A₃; Y₁- Y₃; and X are as defined above; and
wherein,
the compound of formula (V) is positively charged and provided together with an anionic species so that the provided compound is a salt.

The present invention also relates to a pharmaceutical composition comprising the compound according to formula (I) and/or (II). While it is possible for the active compound to be administered alone, it is preferably to present it as a pharmaceutical composition (e.g. formulation) comprising at least one active compound, as defined above, together with one or more pharmaceutically acceptable carriers, adjuvants, excipients, diluents, fillers, buffers, stabilisers, preservatives, lubricants, or other materials well known to those skilled in the art and optionally other therapeutic or prophylactic agents. Suitable carriers, excipients, etc. can be found in standard pharmaceutical texts, for example, Remington's Pharmaceutical Sciences, 18th edition, Mack Publishing Company, Easton, Pa., 1990.

The compounds disclosed herein are useful in the treatment and prophylaxis of cancer, in particular also against secondary cancers (metastasis).

Examples of cancers which may be treated by the active compounds include, but are not limited to, a carcinoma, for example a carcinoma of the bladder, breast, colon (e.g. colorectal carcinomas such as colon adenocarcinoma and colon adenoma), kidney, epidermal, liver, lung, for example adenocarcinoma, small cell lung cancer and non-small cell lung carcinomas, oesophagus, gall bladder, ovary, pancreas e.g. exocrine pancreatic carcinoma, stomach, cervix, thyroid, prostate, or skin, for example squamous cell cercinoma; a hematopoietic tumour of lymphoid lineage, for example leukaemia, acute lymphocytic leukaemia, B-cell lymphoma, T-cell lymphoma, Hodgkin's lymphoma, non- Hodgkin's lymphoma, hairy cell lymphoma , or Burkett's lymphoma; a hematopoietic tumour of myeloid lineage, for example acute or chronic myelogenous leukemias, myelodysplastic syndrome, or promyelocytic leukaemia; thyroid follicular cancer; a tumour of mesenchymal origin, for example fibrosarcoma or habdomyosarcoma; a tumour of the central or peripheral nervous system. for example astrocytoma, neuroblastoma, glioma or schannoma; melanoma; seminoma; teratocarcinoma; osteosarcoma; xenoderoma pigmentoum; keratoctanthoma; thyroid follicular cancer; or Kaposi's sarcoma.

The compounds of the present invention may be used as pharmaceutically active principles, for example in a pharmaceutical composition. For example, they are useful as medicaments. The compounds of the present invention are preferably used as medicaments against cancer. Accordingly, the present invention relates to the use of the organometallic compounds comprising a structure of formulae (I), (II) and (V) in therapeutic cancer treatment.

The invention provides compounds comprising a structure of formulae (I), (II) and (V), or prodrugs or solvates thereof ("active compounds"), for use in a method of treatment of the human or animal body. A method of treatment may comprise administering to such an individual a therapeutically-effective amount of the compound of the present invention, preferably in the form of a pharmaceutical composition. The term treatment as used herein in the context of treating a condition, pertains generally to treatment and therapy, whether of a human or animal (e.g. in veterinary applications), in which some therapeutic effect is achieved, for example, the inhibition of the progress of the condition, and includes a reduction in the rate of the progress, a halt in the rate of the progress, amelioration of the condition, and cure of the condition. The condition usually is associated with suffering, from psychological and/or physical pain, with the individual being in need of a treatment. Treatment as a prophylactic measure (i.e. prophylaxis) is also included.

The compound of the invention or pharmaceutical composition comprising the active compound may be administered to an individual by any convenient route of administration, whether systemically /peripherically or at the site of desired action, including but not limited to, oral (e.g. by ingestion), topical (including e.g. transdermal, intranasal, ocular, buccal and sublingual), pulmonary (e.g. by inhalation or insufflation therapy using an aerosol, e.g. through mouth or nose), rectal, vaginal, parenteral, for example by injection, including subcutaneous, intradermal, intramuscular, intravenous, intraarterial, intracardiac, intrathecal, subcuticula, subcapsular, intraorbital, intraperitoneal, intratracheal, subarachnoid, and intrasternal, by implant of a depot (e.g. subcutaneously or intramuscularly).

The following non-limiting examples illustrate the present invention.

### Examples

### Example 1: Synthesis of Compounds of the Invention

A first ruthenium cluster with a nuclearity of three, [(η⁶-C₆H₆)(η⁶-C₆Me₆)₂Ru₃(µ-H)₃(µ₃-O)][BF₄] **1a,** was prepared as disclosed in M. Faure, M. Jahncke, A. Neels, H. Stoeckli-Evans, G. Süss-Fink (1999), Polyhedron 18, 2679.

Another ruthernium cluster, [(η⁶-C₆H₆)(η⁶-1,4-ⁱPrC₆H₄Me)(η⁶-C₆Me₆)Ru₃(µ-H)₃(µ₃-O)][BF₄] **1b,** was prepared as disclosed in L. Vieille-Petit, G. Süss-Fink, B. Therrien, T. R. Ward, H. Stoeckli-Evans, G. Labat, L. Karmazin-Brelot, A. Neels, T. Bürgi, R. G. Finke, C. M. Hagen (2005), Organometallics, 24, 6104.

The compounds are shown in Figure 1. This figure also shows compounds with nuclearity of 4, in particular [(η⁶-C₆H₆)₄Ru₄(µ-H)₄][BF₄]₂ **2a,** [(η⁶-C₆H₅Me)₄Ru₄(µ-H)₄][BF₄]₂ **2b** and [(η⁶-C₆H₆)₄Ru₄(µ-H)₃(µ-OH)][Cl]₂ **2c.** Compound **2b** is new, and was isolated from the reaction of [(η⁶-C₆H₅Me)Ru(µ-Cl)Cl]₂ in water with molecular hydrogen (55 atm, 60°C), which gives the tetranuclear hexahydrido cluster [(η⁶-C₆H₅Me)₄Ru₄(µ-H)₆]²⁺ that further reacts slowly with oxygen to form the tetrahydrido cluster isolated as the tetrafluoroborate salt **2b.**

### Example 2: Effect of Compounds 1a and 1b on Cancer Cell Viability

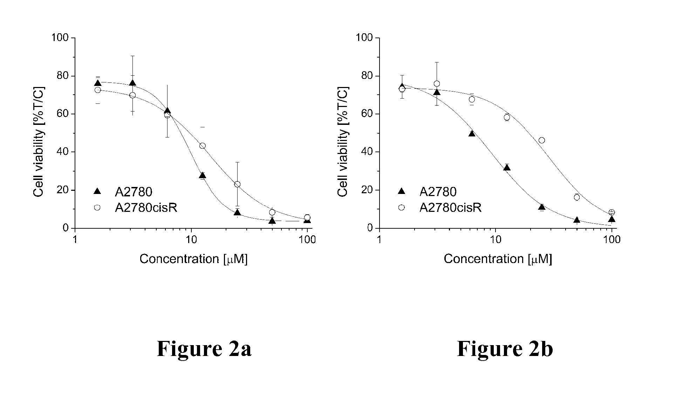

The ability of the compounds to inhibit cancer cell viability was performed against two different ovarian cancer cell lines, A2780 and its cisplatin-resistant strain A2780cisR, which exhibit a 6-fold increase in cisplatin resistance. The effects of the clusters on the cancer cell growth were evaluated after an exposure period of 72 hours using the MTT [3-(4,5-dimethylthiazol-2-yl)-2,5-diphenyltetrazolium bromide] assay which measures mitochondrial dehydrogenase activity as an indication of cell viability. The IC₅₀ values for the inhibition of cell viability of the complexes are listed in Table 1. In addition, the dose-response curves for **1a** and **1b** against the two cell lines are illustrated in Figures 2a and 2b.

**Table 1. Inhibition of cell viability (IC₅₀) of complexes on A2780 and A2780cisR ovarian carcinoma cell lines after 72 hours of incubation, determined using MTT assay.**

| **Compounds** | **A2780** | **A2780cisR** |
|---|---|---|
| Cisplatin | 1.5 ± 0.3 | 8.7 ± 1.6 |
| RAPTA-C | > 100 | > 100 |
| **1a** | 9.8 ± 0.2 | 14.6 ± 0.7 |
| **1b** | 9.1 ± 0.9 | 28.9 ± 2.8 |
| **2a** | > 100 | > 100 |
| **2b** | > 100 | > 100 |
| **2c** | > 100 | > 100 |

From Table 1 it is clear that, while both the triruthenium clusters (**1a** and **1b**) are remarkably active in both cell lines, both being slightly less active in the cisplatin-resistant A2780cisR cell line, the tetraruthenium clusters **(2a-2c)** are not cytotoxic. Although the values are about 3-6 times higher than cisplatin, they are low in comparison to ruthenium-based complexes, typically 20-30 times lower than the class of antimetastatic ruthenium(II)-arene complexes containing the 1,3,5-triaza-7-phospha-adamantane ligand (RAPTA-C). The activities are also significantly higher than organometallic ruthenium complexes containing imidazolium, dihydroxypyridyl, ferrocenyl and polyoxomolybdenum clusters screened for inhibition of cancer cell growth ability against the same cell lines under similar condition. To date, they are some of the most active ruthenium anticancer compounds reported.

Without wishing to be bound by theory, it is interesting to consider why the triruthenium clusters are highly cytotoxic in comparison to the tetraruthenium clusters, since the two classes of clusters exhibit one major difference with respect to their chemical reactivity. The triruthenium clusters present a hydrophobic pocket and a µ₃-oxo ligand, which could form supramolecular interactions with arenes and other functions. Indeed, the hydrophobic pocket spanned by the three arene ligands can accommodate arene moieties, while the µ₃-oxo ligand interacts strongly with hydroxyl groups. By contrast, the tetraruthenium clusters do not contain a hydrophobic pocket or a µ₃-oxo ligand, and, without wishing to be bound by theory, it is therefore tempting to attribute the cytotoxic activity of **1a** and **1b** to a supramolecular recognition process within the cancer cell. Since hydrophobic arene units and hydroxyl groups are usually buried inside proteins, it is possible that a highly selective process is in operation. Clearly, further experiments are required to prove such a hypothesis, but nevertheless, the excellent activity of **1a** and **1b** in the ovarian cell lines is striking.

## Claims

1. Compounds of formula (I) for use as a medicament, 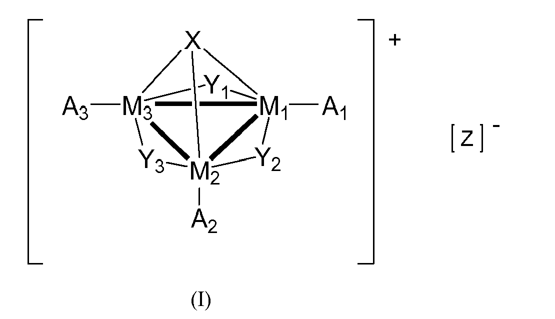 wherein,
M₁, M₂ and M₃ are metals selected independently from each other from Ru, Os, Ir, Rh, Co and Fe;
X is selected from O, N, P, S, Se, or Te;
Y₁, Y₂, Y₃ are independently of each other selected from H, OH, SR₁, and PR₁R₂, wherein R₁, R₂ are, independently of each other, selected from aryl and alkyl, said alkyl or aryl optionally being substituted and optionally comprising one or more heteroatoms;
A₁, A₂ and A₃ are independently of each other selected from η⁶-arenes, η⁵-cyclopentadienyls, or derivatives of these; and,
Z is a pharmaceutically acceptable anionic species.

2. The compounds of claim 1, wherein A₁, A₂ and/or A₃ are selected from compounds of formula (III) or (IV): 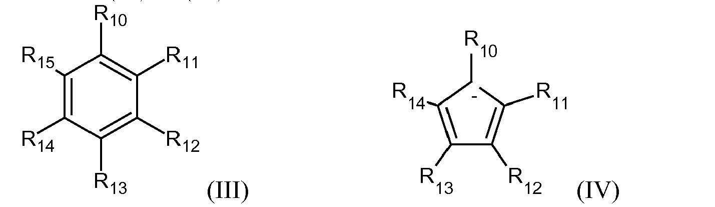 wherein, if A₁, A₂ and/or A₃, is (are) (III), any one of R₁₀-R₁₅, or, if A₁, A₂ and/or A₃ is (IV), respectively, any one of R₁₀-R₁₄, are independently selected from H, C1-C20 alkyl, C2-20 alkenyl, C2-C20 alkynyl, C6-C22 aryl, said alkyl, alkenyl, alkynyl being linear, branched or cyclic, and said alkyl, alkenyl, alkynyl and aryls being optionally substituted and optionally comprising one or more heteroatoms,
wherein any of the residues R₁₀-R₁₅ or R₁₀-R₁₄, respectively may be covalently connected with one or more other residues of R₁₀-R₁₅ or R₁₀-R₁₄, respectively, to form one or several rings fused to the ring of formula (III) or (IV), respectively.

3. The compounds of claim 2, wherein, if A₁, A₂ and/or A₃, is (are) (III), any one of R₁₀-R₁₅, or, if A₁, A₂ and/or A₃ is (are) (IV), respectively, any one of R₁₀-R₁₄, is independently selected from H and a C1-C5 alkyl.

4. The compounds according to any one of the preceding claims, wherein M₁, M₂ and M₃ are Ru.

5. The compounds according to any one of the preceding claims, wherein X is oxygen (O).

6. The compounds according to any one of the preceding claims, wherein Y₁, Y₂, Y₃ are hydrogen (H).

7. A compound selected from [(η⁶-C₆H₆)(η⁶-C₆Me₆)₂Ru₃(µ-H)₃(µ₃-O)][Z] and [(η⁶-C₆H₆)(µ⁶-1,4-ⁱPrC₆H₄Me)(η⁶-C₆Me₆)Ru₃(µ-H)₃(µ₃-O)][Z] wherein Z is a pharmaceutically acceptable anionic species.

8. Compounds of claim 1 for the treatment of cancer.

9. Compounds of claim 1 for the treatment of metastasis.

10. A pharmaceutical composition comprising the compound according to formula (I).

11. Method for the treatment of cancer, the method comprising the step of administering to an individual in need thereof a pharmaceutically effective amount of the compound according to formula (I) as defined in any one of Claims 1 to 10.
